# EUROPÄISCHE PATENTANMELDUNG

(11) **EP 4 163 511 A1**
(43) Veröffentlichungstag der Anmeldung: **12.04.2023**
(21) Anmeldenummer: 22210112.3
(22) Anmeldetag: 19.12.2016
(51) Int. Cl.: F16D 55/2255, F16D 65/097

(54) **BREMSBELAGHALTERUNG EINER FAHRZEUG-SCHEIBENBREMSE UND BREMSBELAG FÜR EINE SCHEIBENBREMSE**

(30) Priorität: 22.12.2015 DE 102015122585
(62) Teilanmeldung aus: 16828705.0
(71) Anmelder: BPW Bergische Achsen Kommanditgesellschaft, 51674 Wiehl (DE)
(72) Erfinder: SCHWARZ, Michael, 51469 Bergisch Gladbach (DE)
(74) Vertreter: DREISS Patentanwälte PartG mbB

(57) **Zusammenfassung**

Vorgeschlagen wird eine Bremsbelaghalterung einer Fahrzeug-Scheibenbremse mit zu beiden Seiten einer sich radial erstreckenden Bremsscheibe in einem Belagschacht (6) angeordneten Bremsbelägen (3), mit einem quer über die Bremsbeläge (3) führenden, starren Niederhalter (7) und mit einer längs des Niederhalters (7) sich erstreckenden Blattfeder (9). Diese ist einerseits mit ihren zwei Federenden gegen jeweils ein Widerlager, und andererseits auf einem zwischen den Federenden angeordneten Federabschnitt gegen die den Bremsbelägen (3) abgewandte Seite des Niederhalters (7) abgestützt. Um einen Lösungsbeitrag zu dem Problem starker Bewegungen der Bremsbeläge in bestimmten Fahrzuständen, z. B. im Fall starker Erschütterungen der Scheibenbremse, zu leisten, befindet sich eines der beiden Widerlager (62A) an einem Sperr- oder Widerlagerelement (60), das um eine Achse (13A), welche sich in Umfangsrichtung des Bremsbelags (3) erstreckt, drehbeweglich ist. An dem Sperr- oder Widerlagerelement (60) ist mindestens ein Anschlag (64) ausgebildet, welcher einem an dem Bremsbelag (3) ausgebildeten Gegenanschlag (48) gegenüberliegt.

## Beschreibung

Die Erfindung betrifft eine Bremsbelaghalterung einer Fahrzeug-Scheibenbremse nach dem Oberbegriff des unabhängigen Patentanspruchs 1.

Die Erfindung betrifft ferner einen Bremsbelag für eine Scheibenbremse nach dem Oberbegriff des Patentanspruchs 10.

Aus der EP 1 898 115 B1 ist eine Fahrzeug-Scheibenbremse mit zu beiden Seiten einer Bremsscheibe angeordneten Bremsbelägen bekannt, bei der sich ein Niederhalter in Gestalt eines starren Bügels über den Belagschacht des Bremssattels und zugleich quer über die Bremsbeläge erstreckt. Der Niederhalter ist zu der Scheibenbremsachse hin gegen die Bremsbeläge abgestützt, wobei diese Abstützung unter Federkraft erfolgt. Hierzu erstreckt sich außen, längs des Niederhalters, eine mit Ihren Enden gegenüber dem Bremssattel festgelegte Feder, und sie beaufschlagt den Niederhalter mit einer Niederhaltekraft zu der Scheibenbremsachse hin, wodurch die Bremsbeläge in ihren jeweiligen Aufnahmen in dem Bremssattel oder in einem Bremsträger gehalten werden.

In bestimmten Fahrsituationen kann es zu einem nach-oben-Schlagen der Bremsbeläge kommen, etwa durch starke Erschütterungen der Bremse. Dadurch hebt auch der Niederhalter in einer schlagartigen Bewegung radial zur Achse der Bremsscheibe an. Die dabei entstehenden Kräfte und Bewegungen müssen, da der Niederhalter selbst starr ist, ganz von der Feder aufgenommen werden, was die Lebensdauer der Feder verkürzen kann. Es ist daher die Aufgabe der Erfindung, einen Lösungsbeitrag zu dem Problem starker Bewegungen der Bremsbeläge in bestimmten Fahrzuständen, z. B. im Fall starker Erschütterungen der Scheibenbremse, zu leisten. Einen solchen Lösungsbeitrag leisten eine Bremsbelaghalterung einer Fahrzeug- Scheibenbremse mit den Merkmalen des Patentanspruchs 1 und ein Bremsbelag für eine Scheibenbremse mit den Merkmalen des Patentanspruchs 10.

Demgemäß wird vorgeschlagen eine Bremsbelaghalterung einer Fahrzeug-Scheibenbremse mit zu beiden Seiten einer sich radial erstreckenden Bremsscheibe in einem Belagschacht angeordneten Bremsbelägen, mit einem quer über die Bremsbeläge führenden, starren Niederhalter und mit einer längs des Niederhalters sich erstreckenden Blattfeder, die einerseits mit ihren zwei Federenden gegen jeweils ein Widerlager, und andererseits auf einem zwischen den Federenden angeordneten Federabschnitt gegen die den Bremsbelägen abgewandte Seite des Niederhalters abgestützt ist. Erfindungsgemäß befindet sich eines der beiden Widerlager an einem Widerlagerelement, das um eine Achse, welche sich in Umfangsrichtung des Bremsbelags erstreckt, drehbeweglich ist und an dem mindestens ein Anschlag ausgebildet ist, welcher einem an dem Bremsbelag ausgebildeten Gegenanschlag gegenüberliegt. Ferner vorgeschlagen wird ein Bremsbelag für eine Scheibenbremse, der sich aus einem zur Anlage gegen die Bremsscheibe der Scheibenbremse bestimmten Reibbelag und einer Rückenplatte zusammensetzt, deren Vorderseite als Befestigungsfläche für den Reibbelag ausgebildet ist und deren Rückseite als Druckfläche zur Übertragung des Bremsdrucks ausgebildet ist, wobei die Umfangskontur der Rückenplatte bestimmt ist durch einen oberen Rand, einen unteren Rand und zwei sich zwischen dem oberen und dem unteren Rand erstreckende Seitenränder. Erfindungsgemäß ist an der Rückseite der Rückenplatte ein Ansatz angeformt, der dem unteren Rand der Rückenplatte zugewandt mit einer Stützfläche, und dem unteren Rand abgewandt mit zwei nach oben offenen Rinnen versehen ist, von denen sich eine Rinne auf der einen, und die andere Rinne auf der anderen Seite der Mitte zwischen den beiden Seitenrändern der Rückenplatte befindet.

Den hier beschriebenen technischen Lösungen ist gemeinsam, dass die Bremsbeläge mittels Federkraft radial zu der Scheibenbremsachse gehalten sind, und dass im Fall eines Abhebens und vor allem Schlagens eines oder beider Bremsbeläge der diesbezügliche Weg durch Anschläge und Gegenanschläge zumindest eng begrenzt wird.

Vorteilhafte Ausgestaltungen der Bremsbelaghalterung, des Bremsbelags und des Bügels sind in den jeweiligen Unteransprüchen angegeben.

Weitere Aspekte der Erfindung betreffen:
1. Aspekt: Bremsbelaghalterung einer Fahrzeug-Scheibenbremse mit zu beiden Seiten einer sich radial erstreckenden Bremsscheibe in einem Belagschacht (6) eines Bremssattels (1) angeordneten Bremsbelägen (3), gekennzeichnet durch ein schwenkbar auf einer ortsfest an dem Bremssattel (1) angeordneten Achse (13A) gelagertes Sperrelement (60), an dem ein Anschlag (64) ausgebildet ist, welcher einem an einem der Bremsbeläge (3) ausgebildeten Gegenanschlag (48) gegenüberliegt.
2. Aspekt: Bremsbelag nach Aspekt 1, dadurch gekennzeichnet, dass das Sperrelement (60) durch eine an dem Sperrelement (60) abgestützte Feder (9) federbelastet in seiner Sperrstellung gehalten wird.
3. Aspekt: Bremsbelag nach Aspekt 2, dadurch gekennzeichnet, dass das Sperrelement (60) durch die an dem Sperrelement (60) abgestützte Feder (9) mit einer Schwenkkraft beaufschlagt ist, welche bestrebt ist, den Anschlag (64) zu dem Gegenanschlag (48) hin zu bewegen.
4. Aspekt: Bremsbelag nach Aspekt 2 oder 3, dadurch gekennzeichnet, dass der Anschlag (64) an dem Gegenanschlag (48) unter der Kraftausübung der Feder (9) anliegt, und so der Bremsbelag (3) mit einer in radialer und / oder in von der Bremsscheibe axial weg weisender Richtung wirkenden Kraft gegen den Bremssattel (1) anliegt.
5. Aspekt: Bremsbelaghalterung einer Fahrzeug-Scheibenbremse mit zu beiden Seiten einer sich radial erstreckenden Bremsscheibe in einem Belagschacht (6) angeordneten Bremsbelägen (3), mit einem quer über die Bremsbeläge (3) führenden, starren Niederhalter (7) und mit einer längs des Niederhalters (7) sich erstreckenden Blattfeder (9), die einerseits mit ihren zwei Federenden gegen jeweils ein Widerlager, und andererseits auf einem zwischen den Federenden angeordneten Federabschnitt gegen die den Bremsbelägen (3) abgewandte Seite des Niederhalters (7) abgestützt ist, dadurch gekennzeichnet, dass sich eines der beiden Widerlager (62A) an einem Widerlagerelement (60) befindet, das um eine Achse (13A), welche sich in Umfangsrichtung des Bremsbelags (3) erstreckt, drehbeweglich ist und an dem mindestens ein Anschlag (64) ausgebildet ist, welcher einem an dem Bremsbelag (3) ausgebildeten Gegenanschlag (48) gegenüberliegt.
6. Aspekt: Bremsbelaghalterung nach Aspekt 5, dadurch gekennzeichnet, dass in Bezug auf die Achse (13A) das Widerlager (62A) auf der einen, und der Anschlag (64) auf der gegenüberliegenden Seite an dem Wderlagerelement (60) angeordnet ist.
7. Aspekt: Bremsbelaghalterung nach Aspekt 5 oder 6, dadurch gekennzeichnet, dass der Anschlag als eine zu der Achse (13A) hin gekrümmte Kontur (64) ausgebildet ist, deren Abstand (A1 , A2) zu der Achse (13A) sich längs des Verlaufs der Kontur (64) ändert.
8. Aspekt: Bremsbelaghalterung nach Aspekt 7, dadurch gekennzeichnet, dass bei montiertem Widerlagerelement (60) jener Abschnitt der Kontur (64), welcher den größten Abstand (A1) zu der Achse (13A) hat, dem Gegenanschlag (48) gegenüberliegt.
9. Aspekt: Bremsbelaghalterung nach einem der Aspekte 5 - 8, dadurch gekennzeichnet, dass sich die Achse (13A) an einem im Randbereich des Belagschachts (6) angeordneten Bolzen (13) befindet.
10. Aspekt: Bremsbelaghalterung nach einem der Aspekte 5 - 9, dadurch gekennzeichnet, dass das Widerlagerelement (60) ein Bügel ist, der aus einem sich im Wesentlichen parallel zu der Achse (13A) erstreckenden Mittelabschnitt (62), an dem sich das Widerlager (62A) befindet, und gegenüber dem Mittelabschnitt (62) abgewinkelten Seitenabschnitten (63), durch die die Achse (13A) führt, besteht.
11. Aspekt: Bremsbelaghalterung nach Aspekt 10, dadurch gekennzeichnet, dass die Seitenabschnitte des Bügels (60) als von dem Mittelabschnitt (62) abstehende Laschen (63) ausgebildet sind, deren dem Mittelabschnitt (62) abgewandte Ränder die Anschläge (64) bilden.
12. Aspekt: Bremsbelaghalterung nach einem der Aspekte 5 - 11, dadurch gekennzeichnet, dass der Anschlag (64) abstandslos an dem Gegenanschlag (48) anliegt.
13. Aspekt: Bremsbelaghalterung nach einem der Aspekte 5 - 11, dadurch gekennzeichnet, dass der Anschlag (64) dem Gegenanschlag (48) mit geringem radialen Abstand gegenüberliegt.
14. Aspekt: Bremsbelag für eine Scheibenbremse, der sich aus einem zur Anlage gegen die Bremsscheibe der Scheibenbremse bestimmten Reibbelag (4) und einer Rückenplatte (5) zusammensetzt, deren Vorderseite als Befestigungsfläche (16) für den Reibbelag (4) ausgebildet ist und deren Rückseite (17) als Druckfläche zur Übertragung des Bremsdrucks ausgebildet ist, wobei die Umfangskontur der Rückenplatte (5) bestimmt ist durch einen oberen Rand (21), einen unteren Rand (22) und zwei sich zwischen dem oberen und dem unteren Rand erstreckende Seitenränder (23A, 23B), gekennzeichnet durch einen an der Rückseite (17) der Rückenplatte (5) angeformten Ansatz (40), der dem unteren Rand (22) zugewandt mit einer Stützfläche (42), und dem unteren Rand (22) abgewandt mit zwei nach oben offenen Rinnen (48) versehen ist, von denen sich eine Rinne (48) auf der einen, und die andere Rinne (48) auf der anderen Seite der Mitte zwischen den beiden Seitenrändern (23A, 23B) befindet.
15. Aspekt: Bremsbelag nach Aspekt 14, dadurch gekennzeichnet, dass die Rinnen (48) bis in die Dicke der Rückenplatte (5) ragen.
16. Aspekt: Bremsbelag nach Aspekt 14 oder 15, dadurch gekennzeichnet, dass die Rinnen (48), soweit sie an dem Ansatz (40) ausgebildet sind, zu den Seiten (49) des Ansatzes (40) hin offen ausgebildet sind.
17. Aspekt: Bremsbelag nach einem der Aspekte 14 - 16, dadurch gekennzeichnet, dass die Rinnen (48) zu ihren der Rückenplatte (5) abgewandten Enden hin offen sind.
18. Aspekt: Bügel als Befestigungsbügel einer Bremsbelaghalterung, der einstückig aus einem ein Widerlager (62A) für eine Blattfeder der Bremsbelaghalterung aufweisenden Mittelabschnitt (62) und gegenüber dem Mittelabschnitt (62) abgewinkelten Laschen (63) besteht, wobei die Laschen (63) mit auf einer gemeinsamen Fluchtungsachse (13A) angeordneten Öffnungen (66) versehen sind und wobei die dem Mittelabschnitt (62) abgewandten Ränder der Laschen (63) eine gekrümmte Kontur (64) aufweisen, deren Abstand (A1 , A2) zu der Fluchtungsachse (13A) sich längs der Kontur (64) ändert.
19. Aspekt: Bügel nach Aspekt 18, dadurch gekennzeichnet, dass jener Abschnitt der gekrümmten Kontur (64) den größten Abstand (A1) zu der Fluchtungsachse (13A) hat, der auch den größten Abstand zu dem Mittelabschnitt (62) aufweist.
20. Aspekt: Bügel nach Aspekt 18 oder 19, dadurch gekennzeichnet, dass die Kontur (64) halbrund gekrümmt ist, wobei der Radienmittelpunkt der Krümmung versetzt zu der Fluchtungsachse (13A) liegt.

Ausführungsbeispiele werden im Folgenden anhand der Zeichnungen näher erläutert. Darin zeigen:
- Fig. 1: eine perspektivische Darstellung des Bremssattels einer Fahrzeug-Scheibenbremse einschließlich des im Bremssattel ausgebildeten Belagschachts mit einem darin angeordneten Bremsbelag, sowie einer Niederhalteranordnung über dem Belagschacht;
- Fig. 2: die Gegenstände nach Fig. 1 in einer anderen perspektivischen Darstellung, jedoch ohne alle Teile der in Fig. 1 komplett wiedergegebenen Niederhalteranordnung;
- Fig. 3a: die Gegenstände nach Fig. 1 in einem mittig angelegten Längsschnitt durch den Sattel;
- Fig. 3b: die Gegenstände nach Fig. 1 in einem anderen, hier nicht mittig angelegten Längsschnitt durch den Sattel;
- Fig. 3c: den linken Bereich der Fig. 3a in größerem Maßstab;
- Fig. 4a: den linken Bereich der Fig. 2 in größerem Maßstab; Fig. 4b denselben Bereich wie Fig. 4a, allerdings bei fehlendem Bremsbelag;
- Fig. 5: eine perspektivische Darstellung nur des Bremsbelags mit dem Betrachter zugewandter Rückenplatte;
- Fig. 6: eine perspektivische Darstellung nur des an dem Bremssattel verwendeten Niederhalters der Niederhalteranordnung;
- Fig. 7: den Niederhalter in einer Seitenansicht;
- Fig. 8: eine perspektivische Darstellung nur des an dem Bremssattel verwendeten Bügels, welcher zugleich als Widerlagerelement und als Sperrelement dient;
- Fig. 9a - 9c: drei verschiedene Varianten des Bügels und deren Zusammenwirken mit dem Bremsbelag;
- Fig. 10: in vier verschiedenen Schritten das Befestigen der Blattfeder, und
- Fig. 11: eine andere Ausführungsform des Niederhalters und des Bremsbelags.

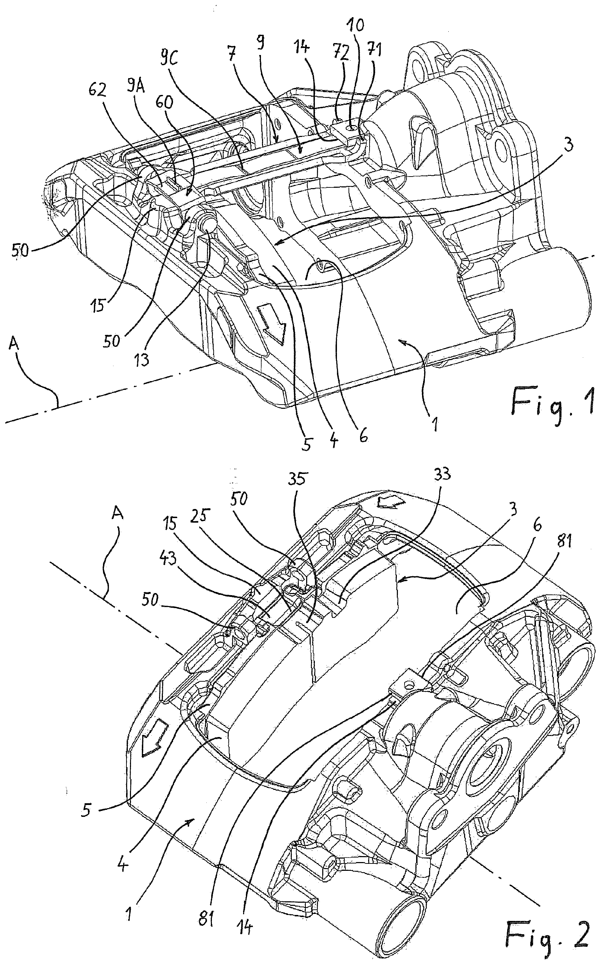

Die Figuren 1 - 3 zeigen den zentralen Teil des Bremssattels 1 einer Fahrzeug- Scheibenbremse für Nutzfahrzeuge. Die Scheibenbremse kann vom Gleitsattel-Bautyp oder vom Festsattel-Bautyp sein. Zu jeder Seite der nur anhand ihrer Drehachse A wiedergegebenen Bremsscheibe ist jeweils ein Bremsbelag angeordnet. Zur Aufnahme der Bremsbeläge ist der Bremssattel 1 mit einem Belagschacht 6 versehen, über den sich ein Belagniederhalter 7 erstreckt. Der Belagniederhalter 7 überbrückt den Belagschacht 6 in der Weise, dass sich der Belagniederhalter 7 quer über beide Bremsbeläge erstreckt, wobei in den Figuren nur der fahrzeugaußen angeordnete Bremsbelag 3 dargestellt ist und nicht der fahrzeuginnen angeordnete, zweite Bremsbelag, welcher identisch oder unterschiedlich gestaltet sein kann.

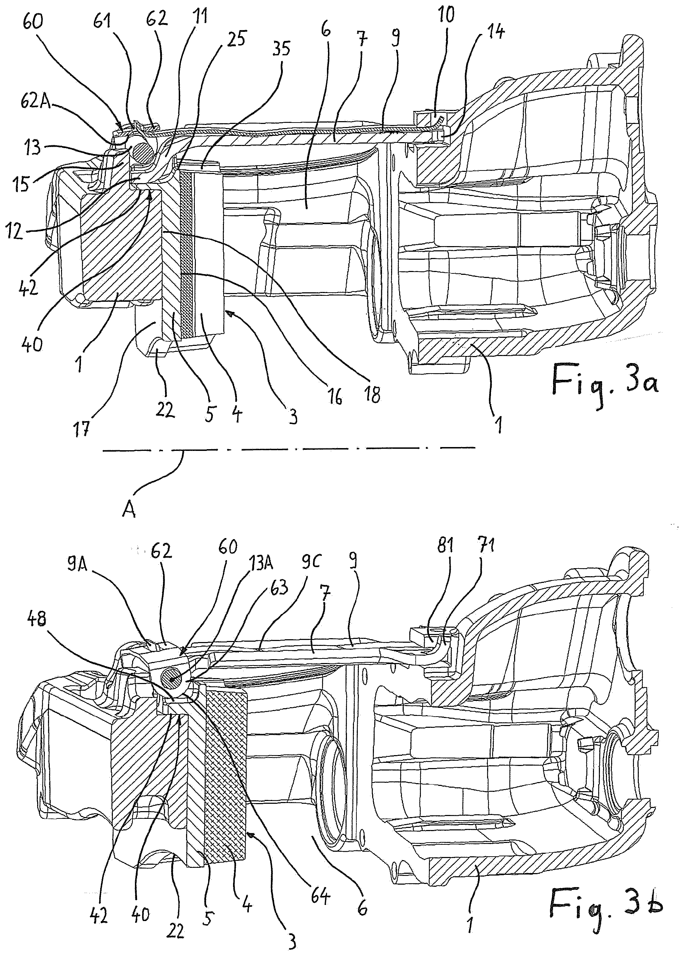

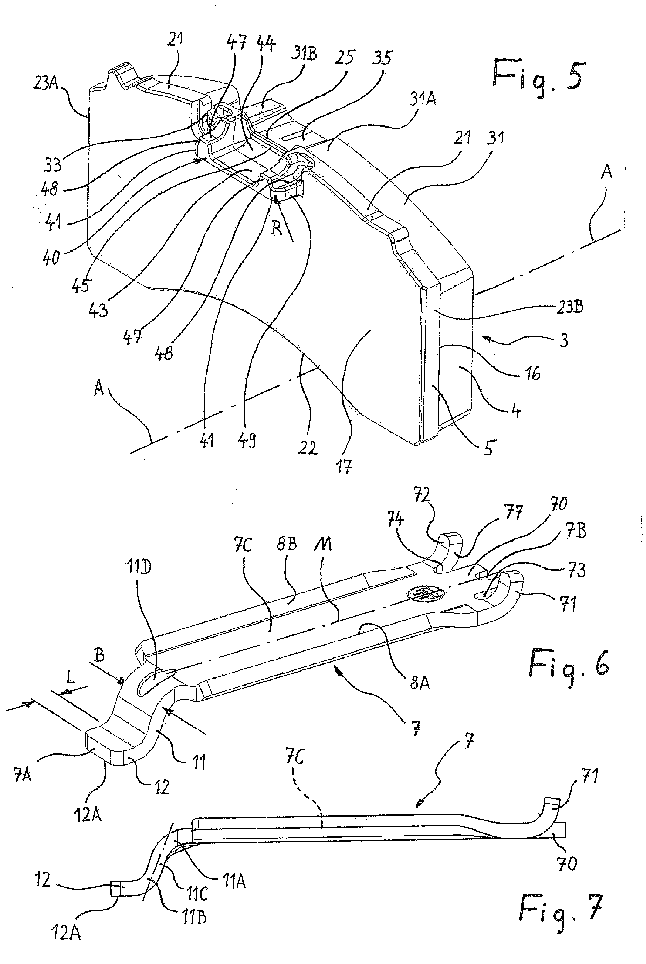

Der Bremsbelag 3 besteht wie üblich aus dem eigentlichen Reibbelag 4 sowie einer Rückenplatte 5. Die Rückenplatte 5 besteht vorzugsweise aus Gussmetall. Die Rückenplatte 5 dient der besseren Verteilung des Bremsdrucks über die Belagfläche. Außerdem übernimmt sie die Führung und die Abstützung des Bremsbelags entweder an dem Bremssattel 1 selbst, oder an einem achsfesten Bremsträger. Der in Fig. 6 und 7 als Einzelteil wiedergegebene Belagniederhalter 7 ist längs seiner Mittellinie M länglich gestaltet und erstreckt sich mit dem größten Teil seiner Länge parallel zu der Drehachse A der Bremsscheibe. Sein rechts wiedergegebenes, fahrzeuginneres Ende ist unmittelbar an dem Bremssattel 1 befestigt, wozu dieses Ende des Niederhalters 7 in einer Ausnehmung 14 (Fig. 3a) des Bremssattels 1 sitzt. Das andere, links wiedergegebene Ende des Niederhalters 7 ist nur mittelbar an dem Bremssattel 1 befestigt, was noch näher erläutert werden wird.

Zur Sicherung der beiden Bremsbeläge in dem Belagschacht 6 ist der Niederhalter 7 als ein starrer Haltebügel ausgebildet, und mit einer biegeelastischen Blattfeder 9 zu einer Niederhalteranordnung kombiniert. Aufgabe der Niederhalteranordnung ist es, beide Bremsbeläge so gegenüber dem Belagschacht 6 zu fixieren, dass die Bremsbeläge nicht nach radial außen, bezogen auf die Drehachse A der Bremsscheibe, aus dem Belagschacht 6 heraustreten oder herausfallen können.

Der Niederhalter 7 ist auf dem überwiegenden Teil seiner Gesamtlänge von rinnenförmigem Querschnitt mit einer auf der Längsmittellinie M des Niederhalters angeordneten Basis 7C, an die sich längs beider Längsränder der Basis Seitenflanken 8A, 8B anschließen, die diesen zentralen Längsabschnitt des Niederhalters gegenüber Biegekräften verstärken.

Mit den Seitenflanken 8A, 8B kann sich der Niederhalter auf dem Rand des innenliegenden, auf der Zeichnung nicht dargestellten Bremsbelags abstützen. Hierzu kann es von Vorteil sein, wenn die Flanken 8A, 8B die Gestalt ansteigender Schrägen aufweisen. In diesem Fall weist der Niederhalter 7 auf diesem größten Teil seiner Länge einen in etwa trapezförmigen Querschnitt auf, und er weist in diesem Fall insbesondere den Querschnitt einer trapezförmigen Rinne auf.

An den durch die Basis 7C gebildeten, flachen Boden der Rinne, welcher in etwa die Breite der Blattfeder 9 aufweist, schließen sich zu beiden Seiten die Seitenflanken 8A, 8B in einem Winkel zwischen 15° und 90° an, vorzugsweise in einem Winkel von 20°.

Die aus einem Federstahl bestehende Blattfeder 9 erstreckt sich ebenfalls auf der Längsmittellinie M. Sie ist mit ihrem einen Federende in einem ersten Federlager, und mit ihrem anderen Federende in einem zweiten Federwiderlager befestigt. Beide Befestigungen sind lösbar, um die Feder 9 und den darunter angeordneten Belagniederhalter 7 zu entfernen, und so zum Austausch der Bremsbeläge von außen her an den Belagschacht 6 zu gelangen. Die Blattfeder 9 erstreckt sich auf der Außenseite des Niederhalters 7 längs zu diesem, und sie ist von außen her gegen den Niederhalter 7 abgestützt, wodurch dieser zu beiden Bremsbelägen hin federbelastet ist. Daher stützt sich der Niederhalter 7, obwohl selbst starr, unter dauernder Federkraft gegen beide Bremsbeläge ab und beaufschlagt diese jeweils mit einer zu der Drehachse A hin gerichteten Kraft.

Die Blattfeder 9 stützt sich nur mit einem sehr kurzen Längsabschnitt außen an dem Belagniederhalter 7 ab. Auf diesem kurzen Längsabschnitt, der sich auf einem Mittelabschnitt der Blattfeder 9 und über dem Belagschacht 6 befindet, ist die Blattfeder mit einer Biegung bzw. einem Knick 9C versehen, der sich quer zur Längserstreckung der Blattfeder 9 erstreckt. Nur mit der Außenseite dieser Biegung bzw. dieses Knicks 9C liegt die Blattfeder 9 an dem Niederhalter 7 an. Nur am Ort dieser diskreten Anlage wird daher der Niederhalter 7 mit der Federkraft in Richtung auf die Bremsbeläge 3 beaufschlagt.

Ein erstes Federwiderlager für die Blattfeder 9 befindet sich fahrzeugaußen neben dem Belagschacht 6, ein zweites Federwiderlager fahrzeuginnen am Bremssattel 1. Das fahrzeugäußere Federwiderlager weist für die Festlegung des betreffenden Endes 9A der Blattfeder 9 einen Bolzen 13 auf. Hingegen ist der Bremssattel 1 zur Bildung des zweiten Federwiderlagers mit der zu dem Belagschacht 6 hin offenen Ausnehmung 14 in Gestalt eines Schlitzes versehen. Dieser Schlitz bietet Platz zugleich für das dortige Ende des Niederhalters 7 wie auch für das dortige Ende der Blattfeder 9.

Für die Montage der Anordnung aus Niederhalter 7 und Blattfeder 9 kann es von Vorteil sein, wenn die gemeinsam in die schlitzförmige Ausnehmung 14 des Bremssattels 1 eingesetzten Enden dieser beiden Bauteile in Längsrichtung zueinander verriegelt sind. Hierzu ist der Niederhalter 7 an diesem Ende mit einer Stirnfläche versehen, in der sich eine Ausnehmung 7B befinden kann (Fig. 6). In die Ausnehmung 7B greift dann ein an dem entsprechenden Ende der Blattfeder 9 ausgebildetes Formschlusselement ein. Diese Art der Längsverriegelung der Blattfeder 9 hat zur Folge, dass, sobald sich der Niederhalter 7 in der Öffnung bzw. Ausnehmung 14 des Bremssattels 1 befindet, die Blattfeder 9 in Längsrichtung verriegelt, nämlich axial an dem Niederhalter 7 gefangen ist. Diese Maßnahme dient der Sicherheit und erleichtert das anschließende Festlegen des Niederhalters 7 und vor allem der Blattfeder 9 an dem anderen Ende, also im Bereich des links wiedergegebenen, fahrzeugaußen gelegenen Federwiderlagers. Alternativ ist eine sichere vorläufige Längsverriegelung der Blattfeder 9 auch erreichbar, indem diese mit einem an dem fahrzeuginneren Ende der Blattfeder 9 ausgebildeten Formschlusselement in eine Öffnung 10 eingreift, die sich unmittelbar in dem Bremssattel 1 befindet. Die Öffnung 10 ist hier eine quer zu dem Schlitz 14 im Bremssattel ausgebildete Bohrung.

Um seitens des Niederhalters 7 einen Beitrag zu leisten, die bauliche Enge zwischen dem rotierenden Fahrzeugrad und den nichtrotierenden Bremsenteilen zu mindern, ist der Niederhalter an seinem fahrzeugaußen gelegenen Ende in besonderer Weise gestaltet, was im Folgenden näher erläutert wird.

Gemäß den Fig. 6 und 7 ist der Niederhalter 7 auf seinem fahrzeugaußen gelegenen Endabschnitt mit einer Breite B schmaler gestaltet, als auf dem vergleichsweise längeren, die Gestalt einer Rinne aufweisenden Längsabschnitt. Die Breite B ist auf diesem Endabschnitt einheitlich und ist nicht größer als die Breite der Basis 7C. Vor allem ist der Niederhalter 7 auf diesem kürzeren Längsabschnitt mit einer an die gestreckt verlaufende Basis 7C anschließenden Kröpfung 11 versehen, indem der Niederhalter 7, ausgehend von der Basis 7C, zunächst eine erste Biegung 11A nach unten, und daran anschließend eine zweite Biegung 11 B als Gegenbiegung aufweist. An die zweite Biegung 1 1 B schließt sich, als fahrzeugäußeres Ende des Niederhalters 7, unmittelbar ein gerader Längsabschnitt 12 an.

Der gerade Längsabschnitt 12 liegt auf diese Weise tiefer bzw. näher an der Drehachse A, als die Basis 7C des rinnenförmigen Längsabschnitts.

Vorzugsweise ist die S-förmige Kröpfung 1 1 so ausgestaltet, dass deren zweite Biegung 1 1 B, welche unmittelbar in den geraden Endabschnitt 12 übergeht, nicht unmittelbar an die erste Biegung 11A anschließt, sondern sich dazwischen noch ein kurzer, gerade verlaufender Abschnitt 11 C befindet. Dessen Winkel zu dem rinnenförmigen Längsabschnitt beträgt 110°.

Der Längsabschnitt 12 erstreckt sich auf einer Länge L im Wesentlichen parallel zu der Drehachse A und parallel versetzt zu dem deutlich längeren, rinnenförmigen Längsabschnitt. Bei dem Ausführungsbeispiel, bei dem der Niederhalter 7 eine Gesamtlänge von etwa 150 mm aufweist, verläuft der Endabschnitt 12 um 15 bis 20 mm versetzt zu der Basis 7C des rinnenförmigen Abschnitts Der Bereich der Kröpfung 11 kann durch eine oder mehrere Versteifungssicken 11 D verstärkt sein, da der Niederhalter 7 hier mit der Breite B relativ schlank ist, und Biegekräfte auftreten können. Vorzugsweise besteht der Niederhalter 7 aus gestanztem und verformtem Stahlblech mit einer Materialdicke von mindestens 4 mm.

Bei montiertem Bolzen 13 wird dieser von der Kröpfung 1 1 oder dem das Ende des Niederhalters 7 bildenden Längsabschnitt 12 ohne Berührungskontakt untergriffen. Trotzdem ist dieser Endbereich des Niederhalters durch den oberhalb angeordneten Bolzen 13 so gefangen, dass er sich unter keinen Umständen nach außen von dem Bremsschacht 6 lösen kann. Die Kröpfung 11 bzw. der Endabschnitt 12 des Niederhalters 7 weisen im montierten Zustand einen solchen Höhenabstand zu dem Bolzen 13 auf, dass es zu keinem Kontakt kommt.

Der Niederhalter 7 liegt von oben her auf den Rückenplatten 5 beider Bremsbeläge auf und ist dort zunächst nur in seiner Längsrichtung beweglich, hingegen quer dazu mittels seitlicher Formelemente der Bremsbeläge fixiert gehalten. Beide Bremsbeläge sind im Belagschacht 6 in Richtung der Drehachse der Bremsscheibe A frei beweglich und in Umfangsrichtung der Bremsscheibe mit einem gewissen Spiel geführt. Diese Kombination von Bewegungsfreiheiten führt dazu, dass der Niederhalter 7 an den Bremsbelägen 3 in seiner Längserstreckung frei und quer mit den Bremsbelägen 3 beschränkt beweglich bzw. schwimmend gelagert ist. Die Bewegung in seiner Längserstreckung wird in montiertem Zustand durch jeweilige Anschläge am Bremssattel 1 eng begrenzt. Hierzu sind die Anschlagflächen, zwischen denen sich der Niederhalter 7 bewegen kann, z. B. durch Fräsen des Bremssattels 1 mechanisch bearbeitet.

In Längsrichtung des Niederhalters 7 steht dessen Endabschnitt 12 ein an dem Bremssattel 1 angeformter Vorsprung 15 mit geringem Abstand gegenüber. Der Vorsprung 15 bildet daher einen Anschlag, welcher die Längsbeweglichkeit des Niederhalters 7 nach fahrzeugaußen hin begrenzt.

Vorzugsweise erstreckt sich der Vorsprung 15 bis nahe an den Umfang des Bolzens 13, allerdings ohne den Bolzen 13 zu berühren.

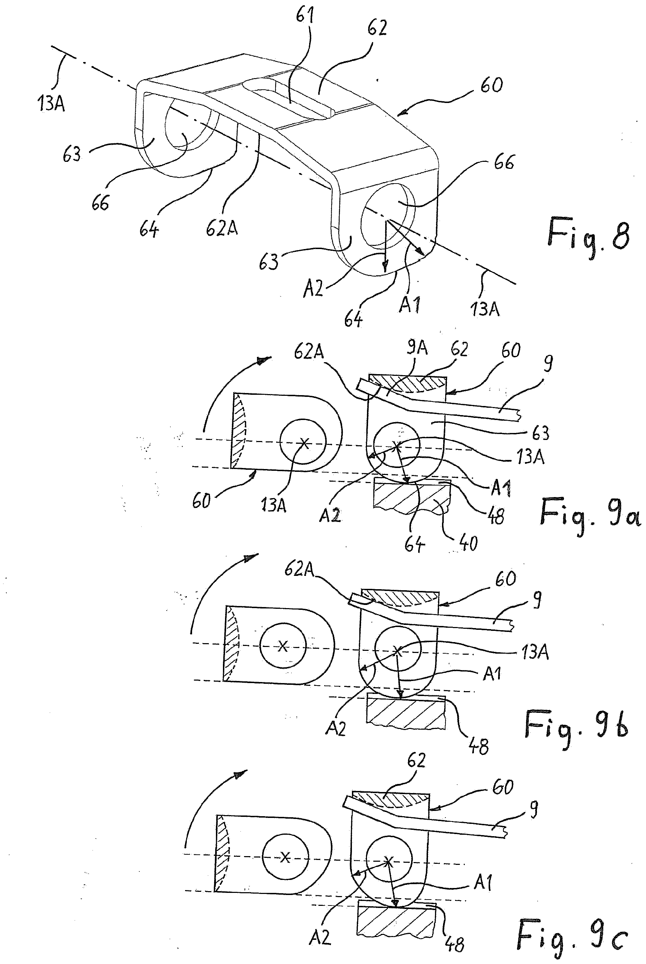

Zwei einstückig an dem Bremssattel 1 angeformte Lagerböcke 50 weisen je eine Bohrung auf, in der der Bolzen 13 auf der Achse 13A sitzt. Damit sich der Bozen 13 nicht in Bolzenlängsrichtung aus den Lagerböcken 50 und damit aus dem Sattel lösen kann, sind an dem Bolzen 13 geeignete Sicherungsringe, Splinte oder dergleichen vorgesehen. Die Fig. 3a - 3c und hier insbesondere Fig. 3b zeigen Einzelheiten der Festlegung des fahrzeugäußeren Endes 9A der Blattfeder 9 an dem Widerlager. Bestandteil dieses Federwiderlagers ist außer dem Bolzen 13 ein Befestigungsbügel 60, der mittels des Bolzens 13 um die Bolzenachse 13A schwenkbeweglich mit dem Bremssattel 1 verbunden ist. Gegen die der Achse 13A zugewandte Innenseite bzw. Unterseite des Bügels 60 stützt sich die Blattfeder 9 mit ihrem Federende 9A ab. Von zusätzlichem Vorteil kann es sein, wenn ein an diesem Federende 9A ausgebildetes Formschlusselement in eine schlitzförmige Öffnung 61 in dem Bügel 60 eingreift, und dadurch die Schwenkposition des Bügels 60 arretiert. Der in Fig. 8 als Einzelteil dargestellte Bügel 60 ist das fahrzeugäußere Widerlagerelement für die Blattfeder 9. Der Bügel 60 setzt sich aus einem zu der Achse 13A parallelen Mittelabschnitt 62, auf dem sich die Öffnung 61 befinden kann, und zwei in Bezug auf den Mittelabschnitt 62 ungefähr rechtwinklig angeordneten Seitenabschnitten 63 zusammen. Diese Seitenabschnitte sind als Laschen 63 gestaltet und jeweils mit einer auf der Achse 13A angeordneten runden Öffnung 66 versehen. Indem die beiden Öffnungen 66 auf der Achse 13A zueinander fluchten, ist die Achse 13A zugleich die Fluchtungsachse der zwei Öffnungen 66. Durch beide Öffnungen zugleich tritt der Bolzen 13 hindurch.

Der der Scheibenbremsdrehachse A zugewandte Rand der Laschen 63 weist eine Randkontur 64 auf, die zu der Achse 13A hin gekrümmt ist. Der der Scheibenbremsachse A zugewandte Konturabschnitt der Kontur 64 bildet einen Anschlag, da der Konturverlauf dergestalt ist, dass die Kontur 64 teils einen größeren Abstand A1, teils einen geringeren Abstand A2 zu der Achse 13A aufweist. Zum Beispiel kann die Kontur 64 exzenterförmig sein oder sie kann kreisbogenförmig sein, dann allerdings mit Versatz zu der Achse 13A.

Der Bolzen 13 ist das Befestigungsmittel, um den als Widerlagerelement und als Sperrelement dienenden Bügel 60 lösbar an dem Bremssattel 1 zu befestigen. Zugleich liegt das Ende 9A der Blattfeder 9 unter Federspannung an der dem Bolzen 13 zugewandten Innenseite des Mittelabschnitts 62 an. Diese Innenseite ist daher das Widerlager 62A, an dem sich die Feder 9 mit ihrem Federende abstützt. Die Summe dieser Maßnahmen führt zur Sicherung und Aufrechterhaltung der Biegespannung in der Blattfeder 9.

Eine zusätzliche Sicherungsmaßnahme kann das formschlüssige Eingreifen eines an dem Federende 9A zusätzlich ausgebildeten, abgewinkelten Formschlusselements in die Öffnung 61 des Bügels 60 sein. Zu diesem Zweck kann die Feder 9 an diesem Federende nach oben gebogen sein, so dass die Außenseite dieser Biegung der Bolzenachse 13A zugewandt ist. Die Montage der Anordnung bestehend aus Belagniederhalter 7, Blattfeder 9, Bolzen 13 und Bügel 60 als Widerlagerelement und Sperrelement erfolgt, indem zunächst die Blattfeder 9 mit ihrem anderen Ende so auf den Niederhalter 7 gelegt wird, dass sie hinter das fahrzeuginnere Ende des Niederhalters 7 greift. Sodann werden die so vorläufig verbundenen Teile Niederhalter und Blattfeder in Längsrichtung in die Ausnehmung 14 in dem Bremssattel 1 hineingeschoben.

In einem nächsten Schritt wird auf das andere Federende 9A der Bügel 60 aufgesetzt, was durch das Eingreifen des Formschlusselements in die Öffnung 61 des Bügels 60 erleichtert werden kann und so für den Monteur noch sicherer wird. Das Ende 9A der Feder 9 stützt sich dabei an dem Widerlager 62A innen an dem Bügel 60 ab. Nun wird nur der Bügel 60 durch manuellen Druck und unter Biegen der Blattfeder nach unten bewegt, bis sich der Bolzen 13 längs der Achse 13A in die Lagerböcke 50 einsetzen lässt. Sodann kann die Druckausübung auf den Bügel 60 beendet werden, da nunmehr die Spannkraft der Blattfeder 9 durch den das Widerlagerelement bildenden Bügel 60 in Verbindung mit dem Bolzen 13 sicher aufgenommen wird.

Nach radial außen hin hält die Blattfeder 9 mit Federvorspannkraft den Niederhalter 7 auf den Bremsbelägen 3 und sorgt dafür, dass bei einem stärkeren Stoß, z. B. aufgrund einer Schlaglochdurchfahrt, der nach radial außen abhebende Bremsbelag 3 wieder in seine Ursprungsposition gedrückt wird. Sollte die Blattfeder 9 durch z. B. mechanische Einflüsse brechen und damit ihre Haltefunktion verlieren, ist der Niederhalter 7 durch den darüber angeordneten Bügel 60 und die Ausnehmung 14 immer noch so sicher gehalten, dass die Bremsbeläge nicht verloren werden können.

Die in Fig. 6 und Fig. 7 wiedergegebene Kröpfung 1 1 des auf der fahrzeugäußeren Seite der Bremsscheibe gelegenen, schmaleren Längsabschnitts des Niederhalters 7 hat den Vorteil, dass in diesem Bereich Scheibenbremsteile radial weniger weit nach außen ragen und damit ein Beitrag geleistet wird, die bauliche Enge zu dem umgebenden, um die Bremse rotierenden Fahrzeugrad zu entschärfen. Allerdings führt die Kröpfung 1 1 zu einem Platzbedarf im Bereich des auf der fahrzeugäußeren Seite der Bremsscheibe angeordneten Bremsbelags 3. Dieser ist daher in besonderer Weise gestaltet, was im Folgenden näher erläutert wird. Gemäß Fig. 5 setzt sich der auf der fahrzeugäußeren Seite der Bremsscheibe angeordnete Bremsbelag 3 aus dem zur Anlage gegen die Bremsscheibe bestimmten Reibbelag 4 und der stabilen Rückenplatte 5 zusammen. Letztere besteht z. B. aus gegossenem Stahl, wobei die Vorderseite als Befestigungsfläche 16 für den Reibbelag 4 ausgebildet ist, während die Rückseite 17 als Druckfläche zur Übertragung des Bremsdrucks ausgebildet ist. Denn mit dieser Rückseite 17 liegt die Rückenplatte 5 gegen eine entsprechende, Druck ausübende Fläche 18 des Bremssattels 1 an. Die Fläche 18 ist zugleich eine Wand des Belagschachts 6.

Die Umfangskontur der Rückenplatte 5 ist bestimmt durch einen oberen bzw., bezüglich der Drehachse A, äußeren Rand 21, einen der Drehachse A zugewandten inneren bzw. unteren Rand 22 und zwei sich zwischen dem oberen und dem unteren Rand erstreckende Seitenränder 23A, 23B, die parallel zueinander verlaufen.

Der obere bzw. äußere Rand 21 zeichnet sich durch einen Hauptverlauf aus, welcher die Form der Bremsscheibe aufgreift. Hierzu zeigt der obere Rand 21 hauptsächlich, d. h. auf seiner überwiegenden Länge, einen kreisbogenförmigen Verlauf, der die Kreisform am Umfang der runden Bremsscheibe übernimmt. Dies hat den Vorteil, dass der Bremsbelag 3 nicht über den technisch erforderlichen Umfang der Bremsscheibe radial nach außen vorsteht.

Mit den zwei Seitenrändern 23A, 23B ist die Rückenplatte 5 in Umfangsrichtung abgestützt, so dass die Bremsmomente auf den Bremssattel 1 oder alternativ auf einen achsfest montierten Bremsträger der Scheibenbremse übertragen werden. Zu einem geringeren Anteil kann die Übertragung der Bremsmomente auch über den unteren Rand 22 der Rückenplatte 5 erfolgen.

Auch der Reibbelag 4 zeichnet sich an seinem oberen bzw. äußeren Rand 31 durch einen Hauptverlauf aus, welcher die Form der Bremsscheibe aufgreift. Hierzu zeigt der obere Rand 31 hauptsächlich, d. h. auf seiner überwiegenden Länge, einen kreisbogenförmigen Verlauf, der die Kreisform am Umfang der runden Bremsscheibe übernimmt, wodurch auch dieser Rand nicht über den Umfang der Bremsscheibe nach radial außen vorsteht, zugleich aber ein Maximum an Kontaktfläche zwischen Reibbelag 4 und Bremsscheibe zur Verfügung steht.

Wenn die Ränder 21, 31 einen grundsätzlich bogenförmigen Verlauf aufweisen, schließt dies einzelne Abweichungen von dieser Hauptgestaltung ein. So kann außermittig in Reibbelag 4 und Rückenplatte 5 eine schmale Ausnehmung 33 angeordnet sein, welche der dortigen Befestigung eines elektrischen Bremsbelag-Verschleißsensors dient. Außerdem können an dem Rand 21, ohne Beeinträchtigung der bogenförmigen Hauptgestaltung des Randes, einzelne kleine Vorsprünge angeformt sein, welche zum Beispiel im Rahmen der Produktion des Bremsbelags von Vorteil sein können. Um Platz und einen Freiraum für die Kröpfung 1 1 des Niederhalters 7 zu schaffen, ist der Hauptverlauf des oberen Randes 21 der Rückenplatte 5 genau in der Mitte zwischen den beiden Seitenrändern 23A, 23B durch eine partielle Absenkung 25 des Randes 21 unterbrochen. Die Absenkung 25 ist breiter als die Breite B des abgekröpften Niederhalterabschnitts.

Nur im Bereich dieser Absenkung 25 ist daher, bezogen auf den Abstand zur Drehachse A, die Höhe der Rückenplatte 5 soweit radial reduziert, dass sich in der Rückenplatte 5 ein Freiraum ergibt, durch den sich der Niederhalter 7 mit zumindest einem Teil seines Querschnitts erstreckt.

Ebenfalls um Platz für den Niederhalter 7 zu schaffen, weist in demselben Bereich auch der Reibbelag 4 einen Freiraum auf. Denn während der Reibbelag 4 an seinem Außenrand 31 ansonsten hauptsächlich bogenförmig verläuft, ist auch diese primäre Gestaltung in der Mitte zwischen den beiden Seitenrändern 23A, 23B durch eine Absenkung 35 des oberen Randes 31 unterbrochen. Die Absenkung 35 führt auch an der Umfangskontur des Reibbelags 4 zu einem Freiraum, durch den sich der Niederhalter 7 mit zumindest einem Teil seines Querschnitts erstreckt. Hierzu ist die Absenkung 35 breiter als die Breite B des abgekröpften Niederhalterabschnitts.

Der Boden der Absenkung 25 in der Rückenplatte 5 ist tiefer und damit näher zu der Drehachse A angeordnet, als jene Abschnitte 31 A, 31 B des oberen Randes 31 des Reibbelags 4, die sich an die in dem Reibbelag 4 ausgebildete Absenkung 35 in Umfangsrichtung unmittelbar anschließen.

Durch die Absenkung 25 wird daher ein Freiraum für das Queren des Niederhalters geschaffen. Dadurch nimmt der Niederhalter 7 auf diesem Teil seiner Länge eine Position weniger weit radial außen ein, was die durch die bauliche Enge zwischen den Bauteilen der Scheibenbremse und dem um die Bremse rotierenden Fahrzeugrad hervorgerufene Gefahr reduziert, dass es zu einem Schleifen von Bremsenteilen innen am rotierenden Fahrzeugrad kommt.

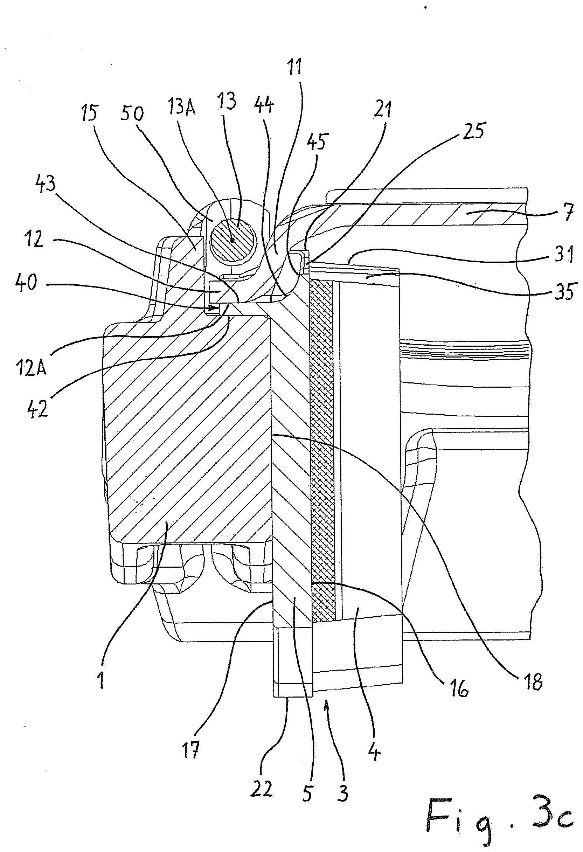

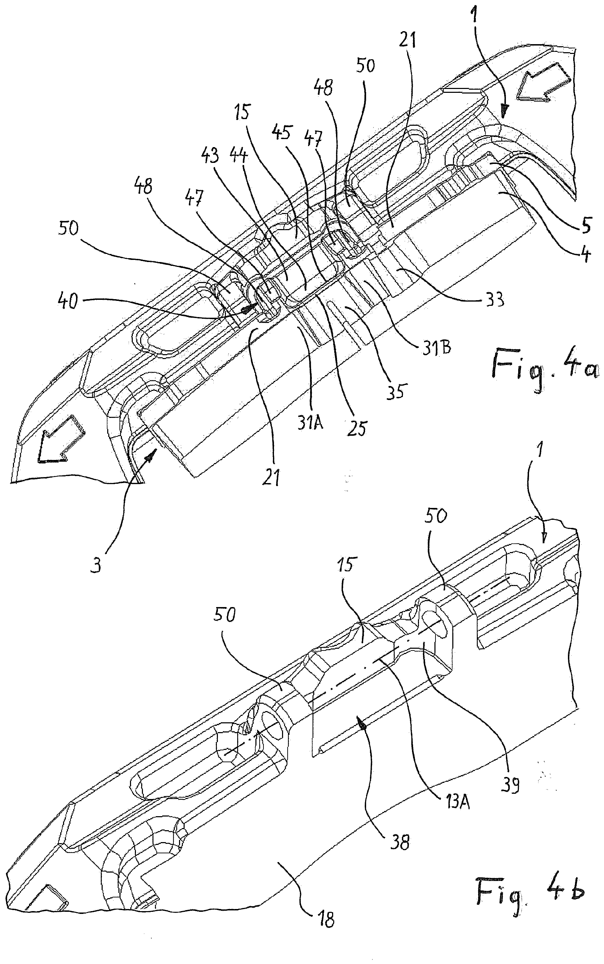

Gemäß Fig. 5 ist an der Rückseite 17 der Rückenplatte 5, unterhalb deren oberen Randes 21, einstückig ein Ansatz 40 angeformt. Der Ansatz 40 ist näher zu dem oberen Rand 21 als zu dem unteren Rand 22 der Rückenplatte 5 angeordnet. Er ist in Umfangsrichtung des Bremsbelags 3 mittig positioniert, weist also zu beiden Seitenrändern 23A, 23B denselben Abstand auf. Er ist zwecks seiner Abstützung auf einer korrespondierend gestalteten Fläche des Bremssattels 1 mit mindestens einer nach unten gerichteten Stützfläche 42 (Fig. 3c) versehen. Diese steht rechtwinklig zu der Rückseite 17 der Rückenplatte 5 und stützt sich am Boden einer Ausnehmung 38 (Fig. 4b) ab, mit der der Bremssattels 1 versehen ist.

In einer Draufsicht von oben ist der Ansatz 40 von viereckigem Grundriss. Die beiden von der Rückseite 17 beabstandeten Außenecken 41 des Ansatzes 40 sind jeweils gerundet, mit einem Eckenradius R von jeweils mindestens 4 mm. Die Rundung der Ecken 41 hat fertigungstechnische Vorteile in Bezug auf die spanende Bearbeitung der korrespondierenden Ausnehmung 38 in dem Bremssattel 1 (Fig. 4b). Diese Ausnehmung 38 dient als Belagaufnahme, indem sie den Ansatz 40 des Bremsbelags zumindest zu einem Teil aufnimmt, und sie ist dafür mit korrespondierend gerundeten Innenecken 39 von mindestens 4 mm Eckenradius versehen. Der Stützfläche 42 abgewandt ist an dem Ansatz 40 eine flache Niederhaltefläche 43 mit einer Breite von 10 bis 20 mm und einer Länge bzw. Tiefe von mindestens 7 mm ausgebildet. Die Niederhaltefläche 43 ist tiefer und damit näher an der Drehachse A angeordnet, als die Absenkung 25. Ausschließlich auf der Niederhaltefläche 43 stützt sich der Niederhalter 7 gegen den Bremsbelag ab, nämlich mit der eine Auflagefläche 12A bildenden Unterseite des auf die Kröpfung 11 folgenden, kurzen Längsabschnitts 12.

Der Längsabschnitt 12 ist zugleich der Endabschnitt des Niederhalters. Seine Stirnfläche steht einer Querwand jener Ausnehmung 38 des Bremssattels 1 gegenüber, die den Ansatz 40 zumindest teilweise aufnimmt.

An die Niederhaltefläche 43 für die Anlage des Niederhalters 7 schließt sich zu dem Reibbelag 4 hin eine im Vergleich kürzere Übergangsfläche 44 an. Die Übergangsfläche 44 steigt bis zu dem Boden der Absenkung 25 an, zum Beispiel in Gestalt einer Biegung oder alternativ einer schrägen Rampe. Die Übergangsfläche 44 trifft an einer Kante 45 auf den Boden der Absenkung 25, wobei gemäß Fig. 3c diese Kante 45 in einer Ebene der Rückenplatte 5 angeordnet ist, die sich zwischen der Ebene der Befestigungsfläche 16 und der Ebene der Rückseite 17 befindet.

An die Niederhaltefläche 43 schließt sich seitlich, also in Umfangsrichtung des Bremsbelags betrachtet, jeweils ein Randbereich 47 an, der die Niederhaltefläche 43 überragt. Der auf der Niederhaltefläche 43 abgestützte Endabschnitt 12 des Niederhalters 7 wird daher von den zwei erhöhten Randbereichen 47 flankiert, wodurch der Niederhalter 7 kein oder wenig seitliches Spiel in Bezug auf den Bremsbelag 3 hat.

Bei montiertem Bügel 60 ist dieser nicht nur ein Widerlagerelement für die Blattfeder 9, sondern er ist zugleich auch ein Sperrelement. Denn die Randkonturen 64 der Laschen 63 bilden einen Anschlag, der nicht oder nur wenig zu gegenüberliegend am Ansatz 40 ausgebildeten Flächen beabstandet ist. Dies hat zur Folge, dass kein bzw. nur ein geringes Abheben des Bremsbelages 3 mit seiner Stützfläche 42 von dem Bremssattel möglich ist. Die genannte Sperrwirkung wird erreicht, indem in jedem der beiden Randbereiche 47 des Ansatzes 40 eine Rinne 48 ausgebildet ist, die den Gegenanschlag bildet.

In Umfangsrichtung des Bremsbelags 3 betrachtet, sind die Rinnen 48 vor bzw. hinter der Mitte der Rückenplatte 5 angeordnet, wobei ihr Abstand zu dieser Mitte derselbe ist. Jede Rinne 48 erstreckt sich längs der jeweiligen Seitenfläche 49 des Ansatzes 40. Der Boden jeder Rinne 48 ist dem Bolzen 13 zugewandt und liegt der jeweiligen Kontur 64 des Bügels 60 entweder mit geringem Abstand gegenüber, oder es besteht sogar ein dauernder Kontakt zwischen der Kontur 64 und dem Boden der Rinne 48. Falls kein dauernder Kontakt besteht, ist aber jedenfalls der Abstand gering und vor allem geringer als der Abstand des Bolzens 13 zu der Kröpfung 11 bzw. zu dem Endabschnitt 12 des Niederhalters 7.

Die Konturen 64 an dem als Sperrelement dienenden Bügel 60 bilden daher jeweils einen Anschlag, und die Rinnen 48 am Bremsbelag 3 bilden jeweils den Gegenanschlag. Sollte daher der Bremsbelag 3 aufgrund starker Erschütterungen nach oben schlagen, was zu einem gleich großen Anheben auch des Niederhalters 7 führt, ist diese Bewegung spätestens dann gesperrt, wenn die Rinne 48 gegen die Kontur 64 stößt. Eine noch größere Bewegung, welche dann ganz von der Blattfeder 9 aufgenommen werden müsste, wird verhindert und so die Lebensdauer der Blattfeder 9 verlängert.

Die Rinnen 48 können längs ihrer einen Seite, nämlich zu der jeweiligen Seitenfläche 49 des Ansatzes 40 hin, offen gestaltet sein. Die Rinnen 48 können an ihrem der Rückenplatte 5 abgewandten Ende offen sein. Der Rückenplatte 5 zugewandt sind sie von solcher Länge, dass sie sich nicht nur über die Tiefe des Ansatzes 40 erstrecken, sondern bis in die Dicke der Rückenplatte 5 hinein. Dadurch ist es möglich, dass der durch die Kontur 64 der Seitenabschnitte 63 gebildete Anschlag nahe der Rückenplatte 5 liegt. Dadurch wird ein Kippmoment im Falle eines Anschlagens am Bremsbelag 3 minimiert oder gar vermieden. In den Figuren 9a - 9c sind verschiedene Möglichkeiten der Gestaltung der Konturen 64 des Bügels 60 wiedergegeben. Gemeinsam ist diesen Ausgestaltungen, dass die dem Mittelabschnitt 62 des Bügels 60 abgewandten Ränder der Laschen 63 jeweils eine gekrümmte Kontur 64 aufweisen, deren Abstand A1, A2 zu der Achse 13 des Bolzens sich längs der Kontur 64 ändert. Dabei hat jener Abschnitt der gekrümmten Kontur 64 den größten Abstand A1 zu der Bolzenachse, der auch den größten Abstand zu dem Mittelabschnitt 62 aufweist.

Bei Fig. 9a und Fig. 9b ist die Kontur 64 halbrund gekrümmt, wobei der Radienmittelpunkt der Krümmung versetzt zu der Bolzenachse 13A liegt.

Bei Fig. 9c ist die Kontur 64 wie ein Nocken oder ein Exzenter gestaltet. Auch hier liegt jener Abschnitt der Kontur 64, welcher den größten Abstand A1 zu der Bolzenachse 13A hat, dem Gegenanschlag 48 gegenüber.

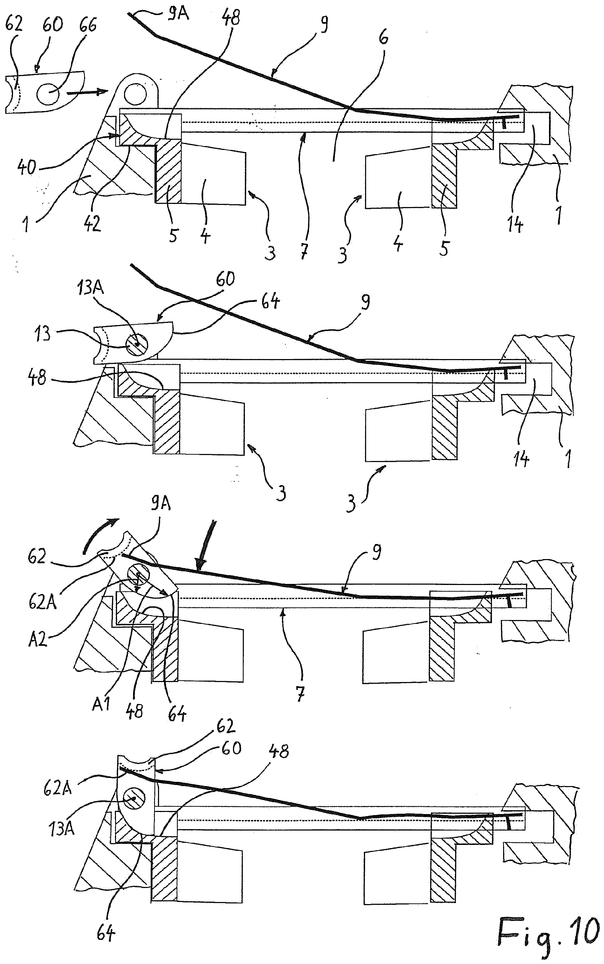

In Fig. 10 ist eine weitere Ausführungsform des Bügels 60 wiedergegeben, hier in einzelnen Montageschritten. Die an dem Bügel 60 ausgebildeten Ränder 64 sind wiederum ausgeprägt nocken- oder exzenterförmig gestaltet. Die Festlegung des fahrzeugäußeren Endes 9A der Feder 9 erfolgt, indem der bereits auf dem Bolzen 13 montierte Bügel 60 gemäß dem Schwenkpfeil um ca. 90° um die Bolzenachse 13A verschwenkt wird. Dadurch gelangt das Ende 9A der Feder unter das Widerlager 62A am Mittelabschnitt 62 des Bügels befindet. Der Bügel 60 bildet hier ein Sperrelement, welches durch die sich abstützende Feder 9 federbelastet in seiner Sperrstellung gehalten wird, die in Fig. 10 unten wiedergegeben ist. Zudem ist der Bügel 60 durch die an seinem Mittelabschnitt 62 abgestützte Feder 9 mit einer Schwenkkraft beaufschlagt, welche bestrebt ist, den an dem Bügel ausgebildeten Anschlag 64 zu dem an dem Bremsbelag ausgebildeten Gegenanschlag 48 hin zu bewegen. Erreicht wird dies, indem die dem Bolzen 13 zugewandte Innenseite des Mittelabschnitts 62, an der sich das Widerlager 62A befindet, gebogen ist. Dies führt zu einer Kraftkomponente welche bestrebt ist, einerseits den Bügel 60 stets gegen ein Rückschwenken zu sichern, und andererseits den daran ausgebildeten Anschlag 64 stets zu dem Gegenanschlag 48 hin zu bewegen. Der Anschlag 64 liegt an dem Gegenanschlag 48 unter Federkraft an, so dass der Bremsbelag 3 mit einer in radialer und / oder in von der Bremsscheibe axial weg weisender Richtung wirkenden Kraft gegen den Bremssattel 1 anliegt.

Auch die Figuren 9a - 9c zeigen eine vergleichbare Gestaltung des Mittelabschnitts 62 des Bügels 60, bei der das Widerlager 62A einen gebogenen Verlauf zeigt, so dass ein Zurückschwenken des Bügels 60 entgegen dem Schwenkpfeil praktisch ausgeschlossen ist. Einer zusätzlichen, formschlüssigen Sicherung des Federendes gegen den Bügel 60 bedarf es in diesem Fall nicht. Auch fahrzeuginnenseitig ist der Niederhalter 7 nur gering gegenüber der Blattfeder 9 beabstandet, welche sich in der schlitzförmigen Ausnehmung 14 an dem Bremssattel abstützt. Somit kann auch der innere der beiden Bremsbeläge durch die Wirkung des Niederhalters 7 nur geringfügig von seiner radialen Stützfläche abheben. Insgesamt wird erreicht, dass die beiden Beläge 3 mittels Federkraft radial zu der Scheibenbremsachse A gehalten sind, und dass im Falle des Abhebens eines oder beider Bremsbeläge 3 der diesbezügliche Weg durch Anschläge und Gegenanschläge eng begrenzt ist. Gemäß Fig. 6 und Fig. 7 ist der Niederhalter 7 an seinem anderen, fahrzeuginnen gelegenen Ende, mit dem er sich von oben her auf der Rückenplatte des innenliegenden Bremsbelags abstützt, in der Weise gestaltet, dass sich eine Abstützung dieses Niederhalterendes gegen den Bremssattel 1 in Umfangsrichtung ergibt. Hierzu ist der Niederhalter 7 an diesem Ende mit einem auf seiner Längsmittellinie M sich erstreckenden und die Basis 7C fortsetzenden Mittelabschnitt 70, sowie mit jeweils einem Seitenabschnitt 71 bzw. 72 zu jeder Seite des Mittelabschnitts 70 versehen. Die Seitenabschnitte 71, 72 befinden sich in Verlängerung der Seitenflanken 8A, 8B des als Rinne gestalteten Niederhalterabschnitts und weisen, in Längsrichtung des Niederhalters betrachtet, zu ihren Enden hin einen nach oben gebogenen, hakenförmigen Verlauf auf. Dadurch kommt es an jedem Seitenabschnitt 71, 72 zur Bildung einer oberhalb der Ebene der Basis 7C angeordneten Innenfläche 77.

Zwecks Abstützung gegen am Bremssattel 1 ausgebildete Gegenflächen 81 sind die beiden Innenflächen 77 so einander zugewandt, dass sich zwischen ihnen ein Freiraum befindet. Die Abstützung an den Gegenflächen 81 kann spielfrei erfolgen, oder mit einem in Umfangsrichtung der Bremsscheibe begrenzten Seitenspiel.

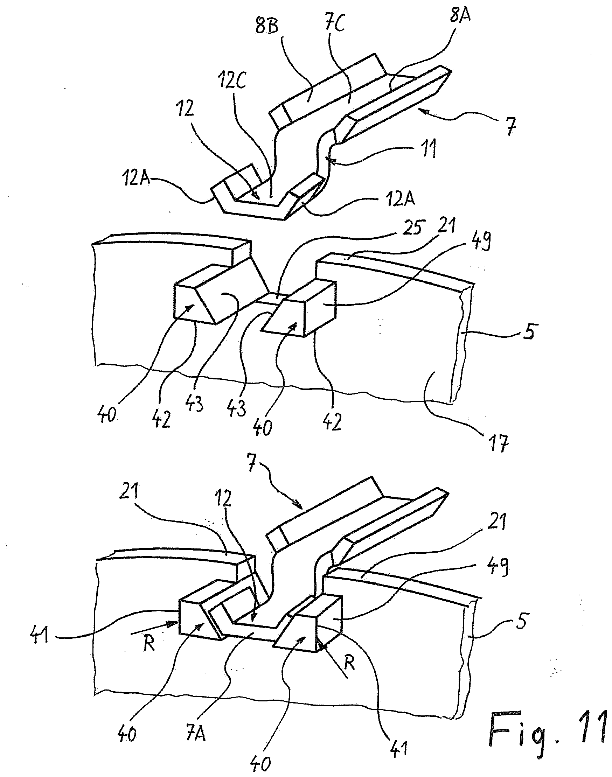

Um die gebogenen Seitenabschnitte 71, 72 durch Umformen der Stahlblechplatte, aus der der Niederhalter 7 besteht, herzustellen, sind die Seitenabschnitte 71, 72 jeweils durch einen Längsschlitz 73, 74, welcher nur zu dem nächstliegenden Ende des Niederhalters offen ist, von dem Mittelabschnitt 70 getrennt. Nur der Mittelabschnitt 70 ragt in den Schlitz 14, hingegen befinden sich die Seitenabschnitte 71, 72 außerhalb des Schlitzes. Zur Abstützung der Innenflächen 77 in Umfangsrichtung der Bremsbeläge sind an dem Bremssattel 1 oberhalb oder alternativ unterhalb des Schlitzes 14 die entsprechenden, einander abgewandten Gegenflächen 81 ausgebildet (Fig. 2). Die Fig. 11 zeigt eine abweichende Gestaltung einerseits des Niederhalters 7, andererseits des an der Rückenplatte 5 des Bremsbelags angeformten Ansatzes. Dieser ist hier zweiteilig ausgebildet, wobei zwischen den beiden Teilansätzen 40 ein Freiraum existiert. Beide Ansätze bzw. Teilansätze 40 sind jeweils mit einer zu ihrer unterseitigen Stützfläche 42 schräg angewinkelten Niederhaltefläche 43 versehen, wobei die beiden Niederhalteflächen 43 gemeinsam ein "V" bilden. Der Winkel der Niederhalteflächen 43 zu der jeweiligen Stützfläche 42 beträgt zwischen 30° und 60°.

Auch in dieser zweiteiligen Ausführungsform des Ansatzes 40 ist dieser unterhalb des oberen Randes 21 der Rückenplatte 5 an der Rückenplatte angeformt.

In Draufsicht beschreiben die beiden Ansätze 40 gemeinsam einen im Wesentlichen viereckigen Grundriss, wobei die beiden zu der Rückseite 17 der Rückenplatte 5 beabstandeten Außenecken 41 dieses Grundrisses gerundet sind mit Eckenradien R von mindestens 4 mm. Auf diese Weise passen auch diese Ansätze 40 in die in Fig. 4b wiedergegebene Ausnehmung 38 des Bremssattels 1.

Zwecks Anpassung an die beiden Ansätze 40 setzt sich der abgesenkte Endabschnitt 12 des Niederhalters 7 zusammen aus einer an die Kröpfung 11 sich anschließenden Basis 12C und zu beiden Seiten der Basis 12C schräg ansteigenden Flanken. Die Unterseiten dieser schräg ansteigenden Flanken bilden jeweils eine Auflagefläche 12A, mit der sich der Niederhalter 7 auf dem Bremsbelag abstützt. Dies sind wiederum die einzigen Orte der Abstützung des Niederhalters 7 auf dem Bremsbelag 3.

Weitere Aspekte der Erfindung betreffen:
Eine Bremsbelaghalterung einer Fahrzeug-Scheibenbremse mit zu beiden Seiten einer sich radial erstreckenden Bremsscheibe in einem Belagschacht 6 eines Bremssattels 1 angeordneten Bremsbelägen 3, die gekennzeichnet ist durch ein schwenkbar auf einer ortsfest an dem Bremssattel 1 angeordneten Achse 13A gelagertes Sperrelement 60, an dem ein Anschlag 64 ausgebildet ist, welcher einem an einem der Bremsbeläge 3 ausgebildeten Gegenanschlag 48 gegenüberliegt.

Ein Bremsbelag, der dadurch gekennzeichnet ist, dass das Sperrelement 60 durch eine an dem Sperrelement 60 abgestützte Feder 9 federbelastet in seiner Sperrstellung gehalten wird.

Ein Bremsbelag, der dadurch gekennzeichnet ist, dass das Sperrelement 60 durch die an dem Sperrelement 60 abgestützte Feder 9 mit einer Schwenkkraft beaufschlagt ist, welche bestrebt ist, den Anschlag 64 zu dem Gegenanschlag 48 hin zu bewegen.

Ein Bremsbelag, der dadurch gekennzeichnet ist, dass der Anschlag 64 an dem Gegenanschlag 48 unter der Kraftausübung der Feder 9 anliegt, und so der Bremsbelag 3 mit einer in radialer und / oder in von der Bremsscheibe axial weg weisender Richtung wirkenden Kraft gegen den Bremssattel 1 anliegt.

Ein Bügel ist als Befestigungsbügel einer Bremsbelaghalterung ausgebildet, der einstückig aus einem ein Widerlager 62A für eine Blattfeder der Bremsbelaghalterung aufweisenden Mittelabschnitt 62 und gegenüber dem Mittelabschnitt 62 abgewinkelten Laschen 63 besteht, wobei die Laschen 63 mit auf einer gemeinsamen Fluchtungsachse 13A angeordneten Öffnungen 66 versehen sind und wobei die dem Mittelabschnitt 62 abgewandten Ränder der Laschen 63 eine gekrümmte Kontur 64 aufweisen, deren Abstand A1, A2 zu der Fluchtungsachse 13A sich längs der Kontur 64 ändert.

Ein Bügel, der dadurch gekennzeichnet ist, dass jener Abschnitt der gekrümmten Kontur 64 den größten Abstand (A1) zu der Fluchtungsachse 13A hat, der auch den größten Abstand zu dem Mittelabschnitt 62 aufweist.

Ein Bügel, der dadurch gekennzeichnet ist, dass die Kontur 64 halbrund gekrümmt ist, wobei der Radienmittelpunkt der Krümmung versetzt zu der Fluchtungsachse 13A liegt.

## Patentansprüche

1. Bremsbelaghalterung einer Fahrzeug-Scheibenbremse mit zu beiden Seiten einer sich radial erstreckenden Bremsscheibe in einem Belagschacht (6) angeordneten Bremsbelägen (3), mit einem quer über die Bremsbeläge (3) führenden, starren Niederhalter (7) und mit einer längs des Niederhalters (7) sich erstreckenden Blattfeder (9), die einerseits mit ihren zwei Federenden gegen jeweils ein Widerlager, und andererseits auf einem zwischen den Federenden angeordneten Federabschnitt gegen die den Bremsbelägen (3) abgewandte Seite des Niederhalters (7) abgestützt ist, **dadurch gekennzeichnet, dass** sich eines der beiden Widerlager (62A) an einem Widerlagerelement (60) befindet, das um eine Achse (13A), welche sich in Umfangsrichtung des Bremsbelags (3) erstreckt, drehbeweglich ist und an dem mindestens ein Anschlag (64) ausgebildet ist, welcher einem an dem Bremsbelag (3) ausgebildeten Gegenanschlag (48) gegenüberliegt.

2. Bremsbelaghalterung nach Anspruch 1, **dadurch gekennzeichnet, dass** in Bezug auf die Achse (13A) das Widerlager (62A) auf der einen, und der Anschlag (64) auf der gegenüberliegenden Seite an dem Widerlagerelement (60) angeordnet ist.

3. Bremsbelaghalterung nach Anspruch 1 oder 2, **dadurch gekennzeichnet, dass** der Anschlag als eine zu der Achse (13A) hin gekrümmte Kontur (64) ausgebildet ist, deren Abstand (A1, A2) zu der Achse (13A) sich längs des Verlaufs der Kontur (64) ändert.

4. Bremsbelaghalterung nach Anspruch 3, **dadurch gekennzeichnet, dass** bei montiertem Widerlagerelement (60) jener Abschnitt der Kontur (64), welcher den größten Abstand (A1) zu der Achse (13A) hat, dem Gegenanschlag (48) gegenüberliegt.

5. Bremsbelaghalterung nach einem der Ansprüche 1 bis 4, **dadurch gekennzeichnet, dass** sich die Achse (13A) an einem im Randbereich des Belagschachts (6) angeordneten Bolzen (13) befindet.

6. Bremsbelaghalterung nach einem der Ansprüche 1 bis 5, **dadurch gekennzeichnet, dass** das Widerlagerelement (60) ein Bügel ist, der aus einem sich im Wesentlichen parallel zu der Achse (13A) erstreckenden Mittelabschnitt (62), an dem sich das Widerlager (62A) befindet, und gegenüber dem Mittelabschnitt (62) abgewinkelten Seitenabschnitten (63), durch die die Achse (13A) führt, besteht.

7. Bremsbelaghalterung nach Anspruch 6, **dadurch gekennzeichnet, dass** die Seitenabschnitte des Bügels (60) als von dem Mittelabschnitt (62) abstehende Laschen (63) ausgebildet sind, deren dem Mittelabschnitt (62) abgewandte Ränder die Anschläge (64) bilden.

8. Bremsbelaghalterung nach einem der Ansprüche 1 bis 7, **dadurch gekennzeichnet, dass** der Anschlag (64) abstandslos an dem Gegenanschlag (48) anliegt.

9. Bremsbelaghalterung nach einem der Ansprüche 1 bis 7, **dadurch gekennzeichnet, dass** der Anschlag (64) dem Gegenanschlag (48) mit geringem radialen Abstand gegenüberliegt.

10. Bremsbelag für eine Scheibenbremse, der sich aus einem zur Anlage gegen die Bremsscheibe der Scheibenbremse bestimmten Reibbelag (4) und einer Rückenplatte (5) zusammensetzt, deren Vorderseite als Befestigungsfläche (16) für den Reibbelag (4) ausgebildet ist und deren Rückseite (17) als Druckfläche zur Übertragung des Bremsdrucks ausgebildet ist, wobei die Umfangskontur der Rückenplatte (5) bestimmt ist durch einen oberen Rand (21), einen unteren Rand (22) und zwei sich zwischen dem oberen und dem unteren Rand erstreckende Seitenränder (23A, 23B), **gekennzeichnet durch** einen an der Rückseite (17) der Rückenplatte (5) angeformten Ansatz (40), der dem unteren Rand (22) zugewandt mit einer Stützfläche (42), und dem unteren Rand (22) abgewandt mit zwei nach oben offenen Rinnen (48) versehen ist, von denen sich eine Rinne (48) auf der einen, und die andere Rinne (48) auf der anderen Seite der Mitte zwischen den beiden Seitenrändern (23A, 23B) befindet.

11. Bremsbelag nach Anspruch 10, **dadurch gekennzeichnet, dass** die Rinnen (48) bis in die Dicke der Rückenplatte (5) ragen.

12. Bremsbelag nach Anspruch 10 oder 11, **dadurch gekennzeichnet, dass** die Rinnen (48), soweit sie an dem Ansatz (40) ausgebildet sind, zu den Seiten (49) des Ansatzes (40) hin offen ausgebildet sind.

13. Bremsbelag nach einem der Ansprüche 10 bis 12, **dadurch gekennzeichnet, dass** die Rinnen (48) zu ihren der Rückenplatte (5) abgewandten Enden hin offen sind.
